# EUROPÄISCHE PATENTSCHRIFT

(11) **EP 1 531 933 B1**
(45) Veröffentlichungstag und Bekanntmachung des Hinweises auf die Patenterteilung: **16.11.2005**
(21) Anmeldenummer: 03797220.5
(22) Anmeldetag: 31.07.2003
(51) Int. Cl.: B01J 31/06, C08G 65/22, C08G 65/26, C08G 65/332, C07F 7/18

(54) **COPOLYMERE AUS ALKYLENOXIDEN UND GLYCIDYLETHERN UND DEREN VERWENDUNG ALS POLYMERISIERBARE EMULGATOREN**
COPOLYMERS MADE OF ALKYLENE OXIDES AND GLYCIDYL ETHERS AND USE THEREOF AS POLYMERISABLE EMULSIFIERS
COPOLYMERES D'OXYDES D'ALKYLENE ET D'ETHERS GLYCIDYLIQUES, ET LEUR UTILISATION COMME EMULSIFIANTS POLYMERISABLES

(30) Priorität: 21.08.2002 DE 10238232; 30.08.2002 DE 10239932
(43) Veröffentlichungstag der Anmeldung: 25.05.2005
(73) Patentinhaber: Clariant GmbH, 65929 Frankfurt am Main (DE)
(72) Erfinder: FALK, Uwe, 63486 Bruchköbel (DE); AHRENS, Hendrik, 65931 Frankfurt (DE); PÖLLMANN, Klaus, 84489 Burghausen (DE); GLOS, Martin, 84453 Mühldorf (DE); KRÄMER, Eckart, 65187 Wiesbaden (DE)
(74) Vertreter: Mikulecky, Klaus
(86) Internationale Anmeldenummer: PCT/EP2003/008463
(87) Internationale Veröffentlichungsnummer: WO 2004/026468

(56) Entgegenhaltungen:
- EP-A- 0 288 286
- DE-A- 10 104 070
- PATENT ABSTRACTS OF JAPAN vol. 010, no. 258 (C-370), 4. September 1986 (1986-09-04) & JP 61 085429 A (DAINIPPON INK & CHEM INC), 1. Mai 1986 (1986-05-01)

## Beschreibung

Die vorliegende Erfindung betrifft Copolymere aus Alkylenoxiden und Glycidylethem, welche als radikalisch polymerisierbare Emulgatoren zur Emulsionspolymerisation verwendbar sind.

Die für die Emulsionspolymerisation nach dem Stand der Technik eingesetzten Emulgatoren sind zumeist anionische und nichtionische Emulgatoren.

Übliche anionische Emulgatoren sind Natrium-, kalium- und Ammoniumsalze von-Fettsäuren, Natriumalkylbenzolsulfonate, Natriumalkyfsulfonate, Natriumolefinsulfonate, Natriumpolynaphthalensulfonate, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und dialkylsulfosuccinate und monoalkylpolyoxethylsulfosuccinate, sowie Alkylpolyethylenglykoletherphosphorsäuremono-, di- und triester und deren Mischungen und Alkylphenolpolyethylenglykoletherphosphorsäuremono-, di- und triester und deren Mischungen, sowie deren Natrium-, Kalium- und Ammoniumsalze.

Als nichtionische Emulgatoren werden üblicherweise Alkylphenolpolyethylenglykolether, Alkylpolyethylenglykolether, Fettsäurepolyethylenglykolether, Ethylen/Propylenglykol-Blockpolymere und Sorbitanesterpolyethylenglykolether eingesetzt.

Emulsionspolymerisationen werden unter Verwendung anionischer und nichtionischer Emulgatoren in der Regel unter Gesamtansatzvorlage oder im Zulaufverfahren durchgeführt, bei der nur ein kleiner Teil der zu polymerisierenden Monomeren im Polymerisationsgefäß vorgelegt und der größere Teil (50 bis 100 Gew.-%) während des Fortschreitens der Polymerisation zugesetzt wird. Die anionischen oder nichtionischen Emulgatoren werden wahlweise während der Emulsionspolymerisation im Zulauf oder in der Reaktorvorlage eingesetzt, oder nachträglich der hergestellten Polymerdispersion zur Stabilisierung zugesetzt.

Dabei sind die nach dem Stand der Technik eingesetzten Emulgatoren über physikalische Kräfte an die Oberfläche der Polymerpartikel gebunden.

EP-A-0 244 841 offenbart oberflächenaktive Komponenten mit einer polymerisierbaren Einheit, die durch radikalische Polymerisationsreaktionen in das Polymerpartikel chemisch eingebaut werden können. Diese Komponenten sind Umsetzungsprodukte von Glycerinmonoallylether mit einem hydrophoben und einem hydrophilen Substitutionsrest an den OH-Gruppen des Glycerinmonoallylethers.

J. Polym. Sci., 30 (1992) 2619 - 2629 und J .Polym. Sci., 31 (1993) 1403 - 1415 offenbaren die Verwendung von Natriumdodecylallylsulfosuccinat als copolymerisierbarer Emulgator in der Emulsionspolymerisation von Vinylacetat.

EP-A-0 501 666 offenbart wässrige Polymerdispersionen, die durch Emulsionspolymerisation unter Verwendung von radikalisch polymerisierbaren Emulgatoren hergestellt wurden.

EP-A-0 472 837 offenbart (1-Propenyl)-alkylphenolethoxylate als Emulgatoren zur Emulsionspolymerisation. EP-A-0 464 454 offenbart den Schwefelsäureester der (1-Propenyl)-alkylphenolethoxylate als Emulgatoren zur Emulsionspolymerisation.

JP-A-11-71340 offenbart Allyl- und Vinylpolyoxyalkylenylalkylsulfonate als Emulgatoren zur Emulsionspolymerisation, als Dispergiermittel zur Suspensionspolymerisation und als Polymermodifizierer.

JP-A-2002-080506 offenbart polymerisierbare Emulgatoren mit 3-Methyl-3-buten-1-yl-Resten, die Glycidyleinheiten enthalten können.

JP-A-2002-097212 offenbart polymerisierbare Emulgatoren mit unmittelbar an den Glycidylrest gebundenen Allylgruppen.

Aufgabe vorliegender Erfindung war es daher, neue Emulgatoren für die Emulsionspolymerisation aufzufinden. Diese Emulgatoren sollen mit den eingesetzten Monomeren copolymerisieren und so chemisch in den Polymerpartikeln gebunden werden, und Polymere mit vorteilhaften Eigenschaften wie verbesserter Stabilität der damit herstellbaren Polymerdispersionen und homogenerer Partikelgrößenverteilung ergeben.

Es wurde nun gefunden, dass mit Copolymeren aus Alkylenoxiden und Glycidylethern, die als reaktive Gruppe eine Doppelbindung tragen, sowie Teilester, Sulfonsäuren und Carbonsäuren davon als Emulgatoren in der Emulsionspolymerisation stabile und koagulatarme Polymerdispersionen hergestellt werden können.

Gegenstand der Erfindung sind daher Copolymere aus Alkylenoxiden und Glycidylethern gemäß Formel (1) 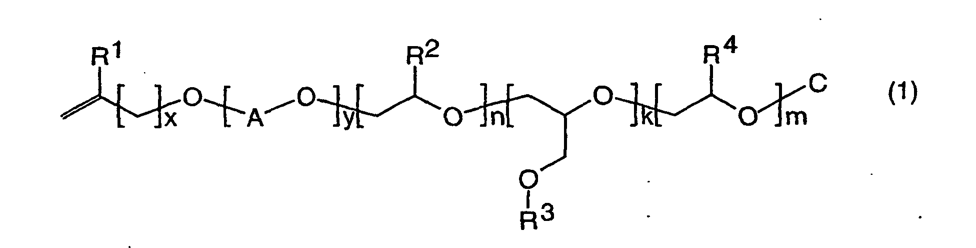 worin
- R¹: Wasserstoff oder ein C₁ - C₄-Alkylrest,
- R² und R⁴: ein Alkyl- oder Arylrest mit 1 bis 30 Kohlenstoffatomen,
- R³: ein Alkyl- oder Arylrest mit 1 bis 50 Kohlenstoffatomen, der auch Heteroatome enthalten kann,
- A: eine Alkylen-Einheit mit 2 bis 6 Kohlenstoffatomen,
- x: eine Zahl von 0 bis 10,
- y: eine Zahl von 0 bis 10,
- n: eine Zahl von 0 bis 100,
- k: eine Zahl von 1 bis 100,
- C: eine Säuregruppe oder Wasserstoff, und
- m: eine Zahl von 1 bis 500 bedeuten,
mit der Maßgabe, dass (y+n) mindestens gleich 1 sein muss.

Ein weiterer Gegenstand der Erfindung sind solche Verbindungen der Formel 1, in denen x, y und n gleichzeitig gleich null sind, und in denen R¹, R², R³, R⁴, A, C und die oben angegebene Bedeutung haben.

Die erfindungsgemäßen Emulgatoren zeichnen sich dadurch aus, dass die reaktive Doppelbindung über die Alkoxyeinheiten mit den Indices y und n als flexiblen "Spacer" an die Glycerineinheit des Moleküls angebunden ist. Der "Spacer" kann zusätzlich zur Stabilisierung der Kunstoffdispersion beitragen.

In einer bevorzugten Ausführungsform der Erfindung handelt es sich bei den Alkoholen der Formel 1 um solche Alkoxylate, deren Alkoxygruppen blockweise angeordnet sind.

x bedeutet in einer bevorzugten Ausführungsform 0 oder 1.

y bedeutet in einer bevorzugten Ausführungsform 0 oder 1.

n bedeutet in einer bevorzugten Ausführungsform eine Zahl von 2 bis 50, insbesondere 3 bis 30.

k bedeutet in einer bevorzugten Ausführungsform eine Zahl von 1 bis 50, insbesondere 2 bis 30.

m bedeutet in einer bevorzugten Ausführungsform eine Zahl von 2 bis 100, insbesondere 3 bis 50.

R² und R⁴ bedeuten in einer bevorzugten Ausführungsform ein Wasserstoffatom oder eine Methylgruppe.

Die Summe (y+n) ist vorzugsweise mindestens gleich 2, insbesondere mindestens gleich 3 und speziell mindestens gleich 4.

Beispiele anorganischer Säuren, die zur Bildung der erfindungsgemäßen Teilester geeignet sind und von denen die Säuregruppe C sich ableiten kann, sind Schwefelsäure und Phosphorsäure. Kommt Phosphorsäure zur Verwendung, so können die erfindungsgemäßen Teilester entweder Monoester oder Diester der Phosphorsäure sein.

In einer bevorzugten Ausführungsform sind die zur Veresterung der Alkohole gemäß Formel 1 verwendeten organischen oder anorganischen Säuren zwei- oder dreiwertig.

Bei den organischen Säuren handelt es sich in einer bevorzugten Ausführungsform um zwei-, drei- oder mehrwertige Carbonsäuren, d.h. Verbindungen, die 2, 3 oder mehr Carboxylgruppen enthalten und die darüber hinaus noch mindestens eine schwefel- oder phosphorhaltige funktionelle Gruppe aufweisen können. Besonders bevorzugt sind schwefelhaltige funktionelle Gruppen, speziell Sulfonatgruppen.

Die besonders bevorzugten Sulfonsäuren/Sulfonate können aliphatische oder aromatische Verbindungen sein. Bevorzugte Sulfonsäuren/Sulfonate enthalten 2 oder 3 Carboxylgruppen, und unter Einschluss der Carboxylgruppen, 3 bis 6 Kohlenstoffatome. Eine besonders bevorzugte Sulfonsäure ist die Sulfobemsteinsäure.

Bei den Sulfon- und Carbonsäuren handelt es sich in einer bevorzugten Ausführungsform um aromatische oder aliphatische Verbindungen die eine oder mehrere Säurefunktionen tragen.

Besonders bevorzugte Teilester und Säure-Derivate entsprechen somit den Formeln (2) bis (7) 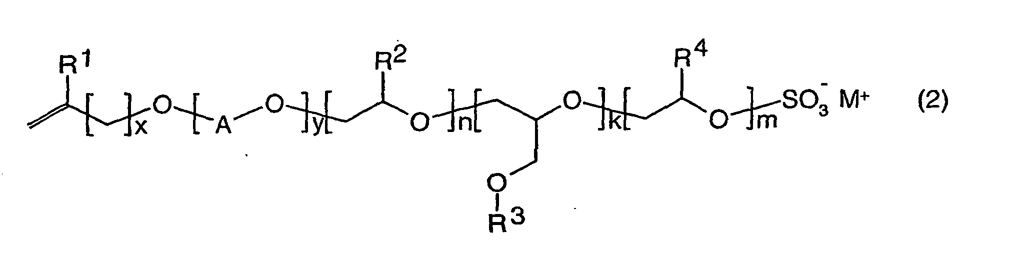 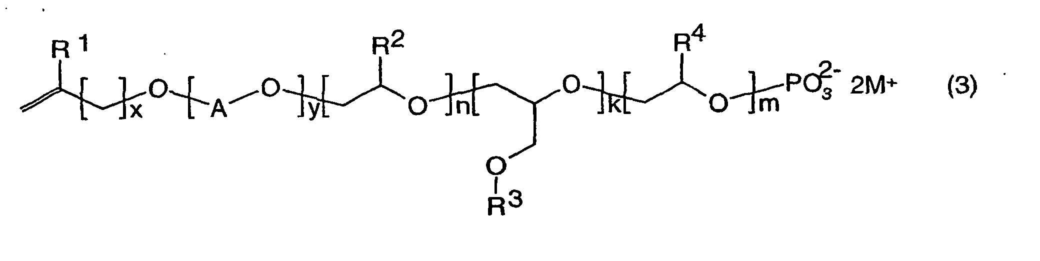 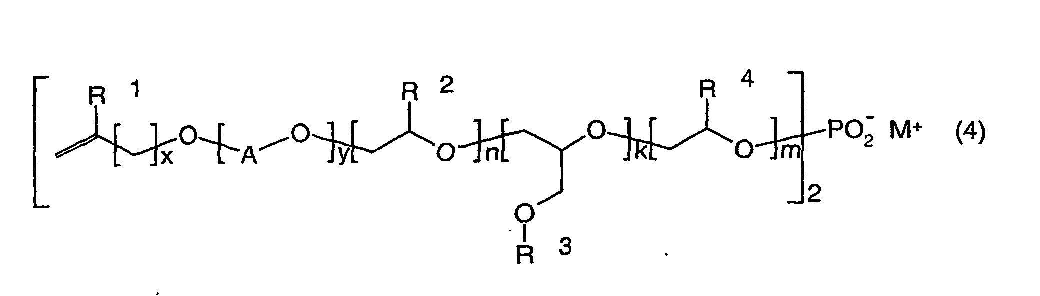 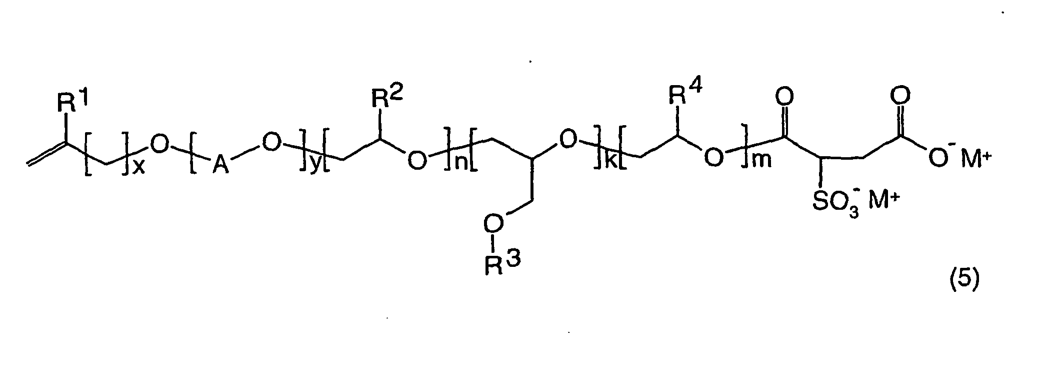 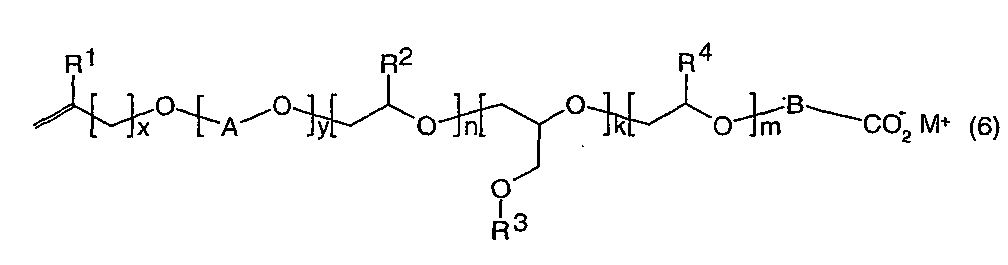 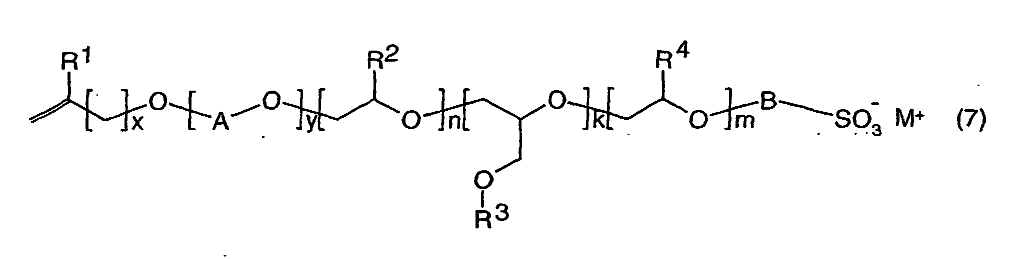 worin R¹, R², R³, R⁴, x, y, m, k und n die oben angegebene Bedeutung haben, M für ein Alkalimetallion, ein Ammoniumion oder für H⁺ und B für eine aliphatische oder aromatische Gruppe mit 1 bis 50 Kohlenstoffatomen, die auch Heteroatome enthalten kann, steht.

Die erfindungsgemäßen Teilester können dadurch hergestellt werden, dass man die Alkohole der Formel 1 mit geeigneten Säuren umsetzt. Es ist jedoch darauf zu achten, dass die Säuren nicht oxidierend wirken, da ansonsten eine Oxidation der Doppelbindung erfolgen kann. Aus diesem Grund wird die Herstellung von Sulfatteilestern vorzugsweise mit Amidosulfonsäure statt mit Schwefelsäure durchgeführt. Die dadurch erhaltenen Ammoniumsalze können durch Umsetzung mit Alkali-Hydroxiden in die entsprechenden Alkalisalze überführt werden. Für die Herstellung von Phosphorsäureteilestern kann Phosphorsäure verwendet werden. Organische Säuren werden vorzugsweise in Form ihrer Anhydride mit den Alkoholen der Formel 1 umgesetzt. Die Einfügung funktioneller Gruppen erfolgt vorzugsweise nach der Herstellung des Teilesters der nicht funktionalisierten Säure. So kann die Herstellung der Sulfobemsteinsäureester gemäß Formel 5 durch Herstellung der entsprechenden Maleinsäureester und der nachfolgenden Sulfonierung z.B. mit Pyrosulfiten erfolgen.

Die Herstellung der Sulfonsäuren, Carbonsäuren und Phosphonsäuren erfolgt durch Umsetzung der Alkohole der Formel 1 mit den entsprechenden Alkonolen, Halogeniden oder cylischen Estem der Sulfon- oder Carbonsäuren.

Ein weiterer Gegenstand der Erfindung ist die Verwendung der erfindungsgemäßen Copolymere als polymerisierbare Emulgatoren in der Emulsionspolymerisation.

Ein weiterer Gegenstand der Erfindung ist ein Verfahren zur Emulsionspolymerisation, bei dem die erfindungsgemäßen Copolymere dem Reaktionsgemisch zugesetzt werden.

In dieser Verwendung werden die erfindungsgemäßen Copolymere mit weiteren Monomeren polymerisiert, aus denen eine Polymerdispersion hergestellt werden soll. Zur Herstellung von Polymerdispersionen sind ungesättigte Monomere geeignet. Bevorzugte olefinisch ungesättigte Monomere sind beispielsweise
- Vinylmonomere, wie Carbonsäureester des Vinylalkohols, beispielsweise Vinylacetat, Vinylpropionat, Vinylether der Isononansäure oder der Isodecansäure,
- Arylsubstituierte Olefine, wie Styrol und Stilben
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Hydroxyethylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dopentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Acrylamidomethylpropansulfonsäure und ihre Alkali- und Ammonium-, Alkylammonium und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N-Methylacrylamid, N-Ethylacrylamid, N-Propylacrylamid, N-Methylolacrylamid sowie die entsprechenden Methacrylsäurederivate und Vinylmethylacetamid.

In einer bevorzugten Ausführungsform werden die oben genannten Monomere mit weiteren Comonomeren, vorzugsweise Olefinen oder halogenierten Olefinen mit 2 bis 8 Kohlenstoffatomen wie z.B. Ethylen, Propen, Butene, Pentene, 1,3-Butadien, Chloropren, Vinylchlorid, Vinylidenchlorid, Vinylidenfluorid und Tetrafluorethylen polymerisiert.

Ein weiterer Gegenstand der Erfindung ist folglich ein Verfahren zur Herstellung von Polymerdispersionen, indem man die erfindungsgemäßen Copolymere mit olefinisch ungesättigten Monomeren in wässriger Phase polymerisiert, sowie die so herstellbaren wässrigen Polymerdispersion.

Zur Herstellung der Polymerdispersionen werden die mit Wasser nicht mischbaren Monomere im allgemeinen mit Hilfe der erfindungsgemäßen Copolymere in der wässrigen Phase in Form von Mizellen fein verteilt und die radikalische Polymerisationsreaktion durch Initiatoren wie beispielsweise Ammonium-, Natrium- und Kaliumperoxodisulfat gestartet.

Weitere Hilfs- und Zusatzstoffe für die Verwendung mit den erfindungsgemäßen Copolymeren können Schutzkolloide wie Carboxymethylcellulose, Hydroxyethylcellulose, Methylhydroxypropylcellulose, sowie teil- und vollverseifter Polyvinylalkohol sein.

Eine Übersicht über gängige Verfahren, Tenside und weitere Hilfsmittel der Emulsionspolymerisation geben Peter A. Lovell und Mohamed S. EI-Aasser, in "Emulsion Polymerization and Emulsion Polymers", erschienen bei John Wiley and Sons, 1997.

Die erfindungsgemäßen Copolymere werden im Reaktionsgefäß vor Beginn der Polymerisationsreaktion vorgelegt oder während der Polymerisationsreaktion dem Reaktionsgefäß zugegeben.

Im allgemeinen werden die erfindungsgemäßen Copolymere in Mengen von 0,1 bis 50, vorzugsweise 0,2 bis 10, insbesondere 0,4 bis 4 Gew.-%, bezogen auf das Gewicht der für die Herstellung der Polymerdispersion verwendeten nicht oder wenig wasserlöslichen olefinisch ungesättigten Monomere als Emulgatoren verwendet.

Die erfindungsgemäßen Copolymere können sowohl alleine als auch in Kombination mit anderen bereits bekannten anionischen und nichtionischen Emulgatoren des Standes der Technik verwendet werden, wie sie eingangs beschrieben wurden. Die Menge der anionischen und nichtionischen Emulgatoren des Standes der Technik beträgt dann vorzugsweise 0,001 bis 5, insbesondere 0,01 bis 1 % und besonders bevorzugt 0,02 bis 0,4 Gew.-% bezogen auf das Gewicht der nicht oder wenig wasserlöslichen olefinisch ungesättigte Monomere.

Die mit den erfindungsgemäßen Copolymeren hergestellten Polymerdispersionen zeigen eine geringe Koagulatbildung während und nach der Polymerisation und eine Verbesserung der Scher-, Temperatur- und Lagerstabilität, der Gefrier/Taustabilität und Elektrolytstabilität gegenüber zwei- und dreiwertigen Kationen wie Calcium, Barium und Aluminium. Weiterhin ist ein Verbesserung der Filmeigenschaften der aus den Polymerdispersionen hergestellten Polymerfilme zu beobachten. Die mit den erfindungsgemäßen Copolymeren hergestellten Polymerdispersionen bilden Filme mit geringer Wasseraufnahme, einem geringen Weißanlauf bei Kontakt mit Wasser, einen kleinen Kontaktwickel gegen Wasser und gute Nass- und Trockenreibechtheiten. Die mit den erfindungsgemäßen Copolymeren hergestellten Polymerdispersionen zeigen abhängig von der Monomerzusammensetzung und der Einsatzmenge sehr geringe Teilchengrößen mit sehr engen Teilchengrößenverteilungen.

### Beispiele

Herstellung von Copolymeren aus Alkylenoxiden und Glycidylethem mit Allyl-Einheiten (Formel 1).

### Beispiel 1 : Mit Allylalkohol initiiertes Ethylenoxid-Phenylglycidylether-Copolymer Mw ca. 1300 g/mol

1 mol Allylalkohol wurde mit 0,1 mol Natriummethanolat in einem inerten Lösemittel (Monoglyme) in einem Laborautoklaven partiell zum Alkoholat umgesetzt. Methanol wurde abdestilliert. Anschließend wurden 5 mol Ethylenoxid zugegeben und für 5 Stunden bei ca. 140°C unter Druck polymerisiert. Zu diesem Reaktionsprodukt wurden 1,1 mol Phenylglycidylether zugetropft und für 15 Stunden bei 90°C gerührt und anschließend nochmals 20 mol Ethylenoxid bei 140°C zugegeben. Nachdem das Ethylenoxid vollständig abreagiert hatte, wurde das Produkt mittels NMR Spektroskopie und OH-Zahl-Bestimmung analysiert.

Die OH-Zahl war 44,5 mgKOH/g
Das NMR-Spektrum entsprach folgenden Strukturen:

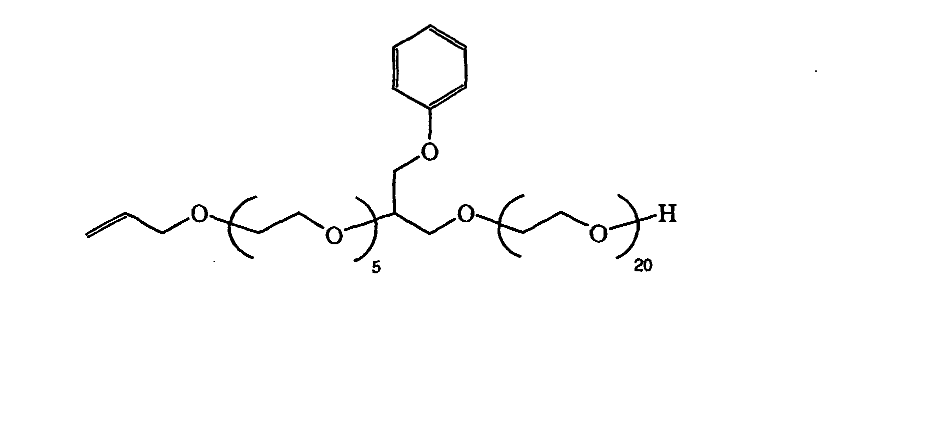

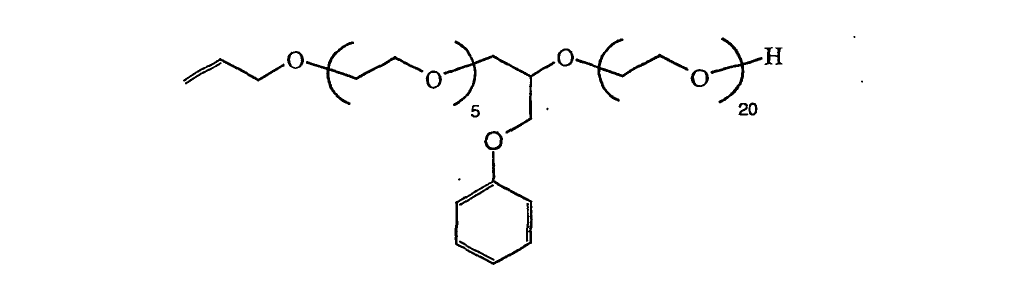

### Beispiel 2: Mit Allylalkohol initiiertes Propylenoxid-Ethylenoxid-Phenylglycidylether Copolymer Mw 1000 g/mol

1 mol Allylalkohol wurde mit 0,1 mol Kaliummethanolat in einem inerten Lösemittel (Monoglyme) in einem Laborautoklaven partiell zum Alkoholat umgesetzt. Methanol wurde abdestilliert. Anschließend wurden 4 mol Propylenoxid zugegeben und für 5 Stunden bei ca. 140°C unter Druck polymerisiert. Zu diesem Reaktionsprodukt wurden 1,1 mol Phenylglycidylether zugetropft, erneut für 15 Stunden bei 90°C gerührt. Anschließend wurden 12 mol Ethylenoxid bei 140°C zugegeben. Nachdem das Ethylenoxid vollständig abreagiert hatte, wurde das Produkt mittels NMR Spektroskopie und OH-Zahl-Bestimmung analysiert.

Die OH-Zahl war 57,9 mgKOH/g
Das NMR Spektrum entsprach folgenden Strukturen:

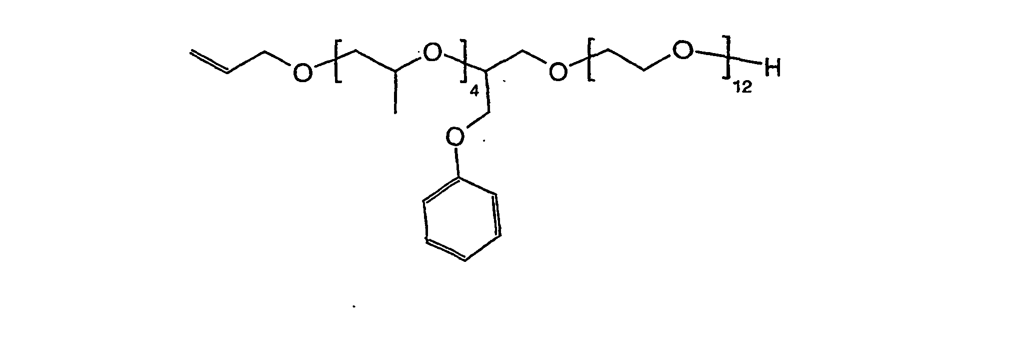

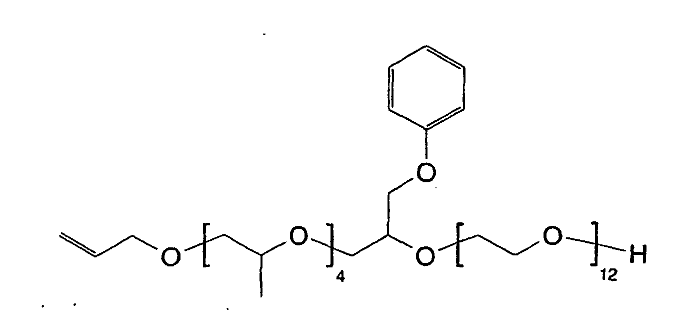

### Beispiel 3: Mit Allylalkohol initiiertes Propylenoxid-Ethylenoxid-Phenylglycidylether Copolymer Mw 1500 g/mol

1 mol Allylalkohol wurde mit 0,1 mol Kaliummethanolat in einem inerten Lösemittel (Monoglyme) in einem Laborautoklaven partiell zum Alkoholat umgesetzt. Methanol wurde abdestilliert. Anschließend wurden 4 mol Propylenoxid zugegeben und für 5 Stunden bei ca. 140°C unter Druck polymerisiert. Zu diesem Reaktionsprodukt wurden 1,1 mol Phenylglycidylether zugetropft, erneut für 15 Stunden bei 90°C gerührt. Anschließend wurden 25 mol Ethylenoxid bei 140°C zugegeben. Nachdem das Ethylenoxid vollständig abreagiert hatte, wurde das Produkt mittels NMR Spektroskopie und OH-Zahl-Bestimmung analysiert.

Die OH-Zahl war 40,5 mgKOH/g
Das NMR Spektrum entsprach folgenden Strukturen:

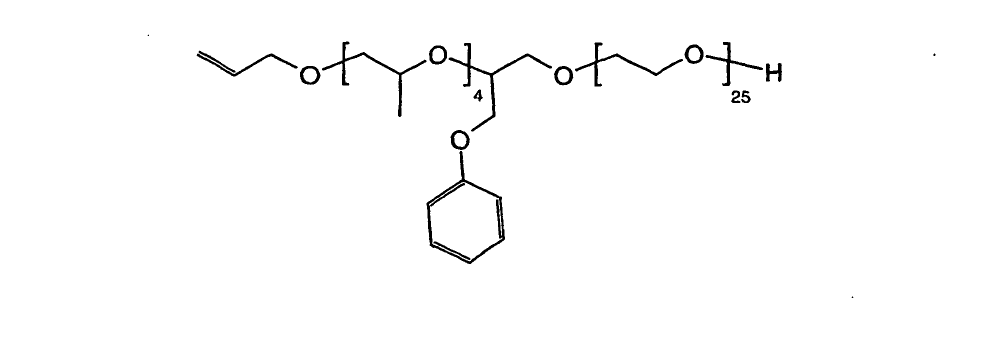

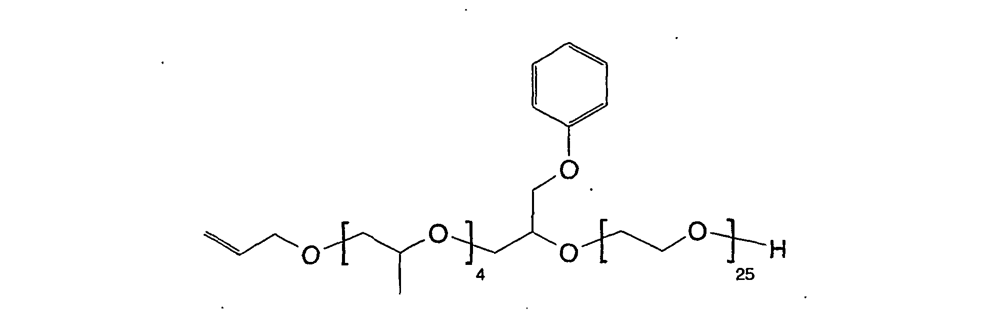

### Beispiel 4 : Mit Allylalkohol initiiertes Butylenoxid-Ethylenoxid-(2-Ethylhexyl)-glycidylether Copolymer Mw 1700 g/mol

1 mol Allylalkohol wurde mit 0,1 mol Kaliummethanolat in einem inerten Lösemittel (Monoglyme) in einem Laborautoklaven partiell zum Alkoholat umgesetzt. Methanol wurde abdestilliert. Anschließend wurden 4 mol Butylenoxid zugegeben und für 5 Stunden bei ca. 140°C unter Druck polymerisiert. Zu diesem Reaktionsprodukt wurden 1,1 mol (2-Ethylhexyl)-glycidylether zugetropft, erneut für 15 Stunden bei 90°C gerührt. Anschließend wurden 26 mol Ethylenoxid bei 140°C zugegeben. Nachdem das Ethylenoxid vollständig abreagiert hatte, wurde das Produkt mittels NMR Spektroskopie und OH-Zahl-Bestimmung analysiert.

Die OH-Zahl war 32,9 mgKOH/g
Das NMR Spektrum entsprach folgenden Strukturen:

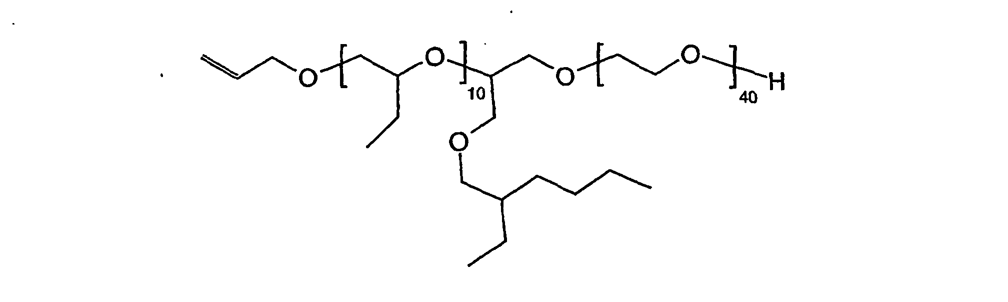

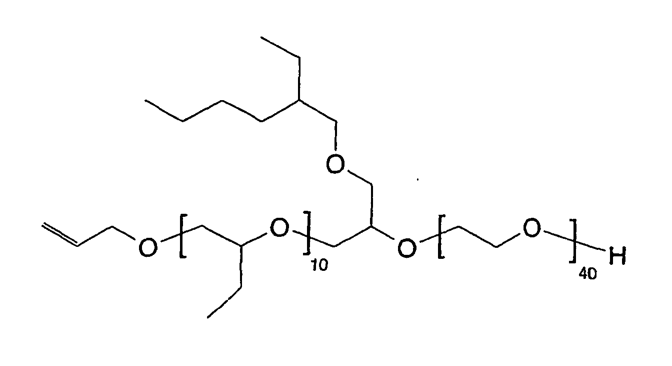

### Beispiel 5: Mit Hydroxybutylvinylether initiiertes Propylenoxid-Ethylenoxid-Phenylglycidylether-Copolymer, Mw 2600 g/mol

1 mol Hydroxybutylvinylether wurde mit 0,1 mol Kaliummethanolat in einem inerten Lösemittel (Monoglyme) in einem Laborautoklaven partiell zum Alkoholat umgesetzt. Methanol wurde abdestilliert. Anschließend wurden 10 mol Propylenoxid zugegeben und für 5 Stunden bei ca. 140°C unter Druck polymerisiert . Zu diesem Reaktionsprodukt wurden 1,1 mol Phenylglycidylether zugetropft, erneut für 15 Stunden bei 90°C gerührt. Anschließend wurden 40 mol Ethylenoxid bei 140°C zugegeben. Nachdem das Ethylenoxid vollständig abreagiert hatte, wurde das Produkt mittels NMR Spektroskopie und OH-Zahl-Bestimmung analysiert.
Die OH-Zahl war 20,5 mgKOH/g
Das NMR Spektrum entsprach folgenden Strukturen:

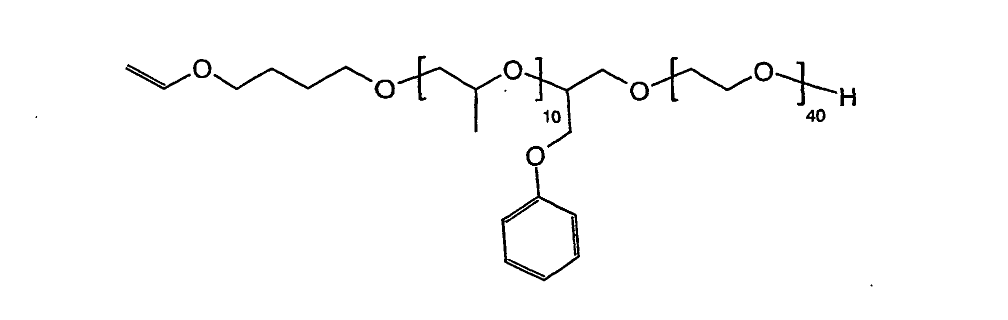

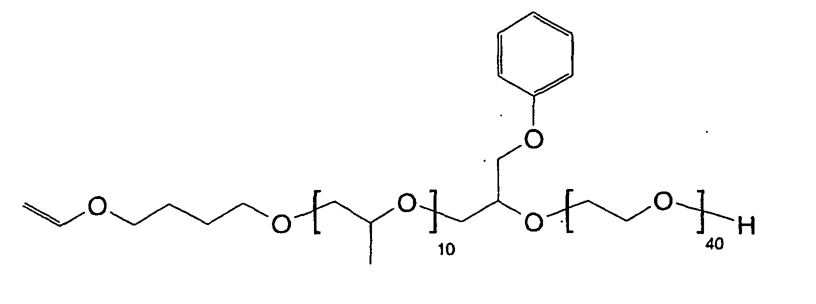

### Herstellung von Teilestern

### Beispiel 6

197 g des Alkohols aus Beispiel 2 wurden unter Stickstoff mit 19,4 g Amidosulfonsäure und 0,5 g 50 %iger unterphosphoriger Säure versetzt. Man erwärmte unter intensivem Rühren 5 h auf 80°C und 1 h auf 100°C. Nach Beendigung der Reaktion ließ man abkühlen und versetzte mit 1,8 g 20 %iger NaOH. Es wurden 212 g (98 %) des Schwefelsäuremonoesters erhalten.

### Beispiel 7

787 g des Alkohols aus Beispiel 1 wurden unter Stickstoff mit 60,7 g Amidosulfonsäure und 1,88 g Harnstoff versetzt und 3 h bei 100°C intensiv gerührt. Nach Beendigung der Reaktion ließ man abkühlen und versetzte mit 2,5 g 20 %iger NaOH. Es wurden 832 g (98 %) des Schwefelsäuremonoesters erhalten.

### Beispiel 8

428 g des in Beispiel 7 hergestellten Schwefelsäuremonoester-Ammoniumsalzes wurden auf 60°C erwärmt. Bei 200 mbar wurden 105 g 18 %ige NaOH zugetropft und anschließend noch 2 h bei 50 mbar nachreagiert, wobei das eingtragene Wasser zusammen mit dem Ammoniak ausgetrieben wurde. Man erhielt 421 g (98 %) des Schwefelsäuremonoester Natriumsalzes.

### Beispiel 9

1275 g des Alkohols aus Beispiel 4 wurden unter Stickstoff mit 72,8 g Amidosulfonsäure und 2,25 g Harnstoff versetzt und 8 h bei 120°C intensiv gerührt. Nach Beendigung der Reaktion ließ man abkühlen und versetzte mit 3 g 20 %iger NaOH. Es wurden 1336 g (99 %) des Schwefelsäuremonoesters erhalten.

### Beispiel 10

634 g des Alkohols aus Beispiel 1 wurden unter Stickstoff mit 48 g Amidosulfonsäure und 1,5 g Harnstoff versetzt. Unter intensivem Rühren wurde 4 h auf 100°C erwärmt. Nach Beendigung der Reaktion ließ man abkühlen und gab 1 g 18 %iger NaOH zu. Es wurden 677 g (99 %) des Schwefelsäuremonoesters erhalten.

### Beispiel 11

1260 g des Alkohols aus Beispiel 1 wurden unter Stickstoff zu 98 g Maleinsäureanhydrid bei 70°C zugetropft. Die Mischung wurde anschließend für 4 h auf 90°C erwärmt und zu einer Mischung aus 52 g Natriumpyrosulfit, 40 g NaOH und 960 g dest. Wasser gegeben und für 5 h bei 80°C zur Reaktion gebracht. Es wurden 2410 g Sulfosuccinatlösung mit einem Gehalt von 60 Gew.-% erhalten.

### Beispiel 12

1275 g des Alkohols aus Beispiel 4 wurden unter Stickstoff zu 74 g Maleinsäureanhydrid bei 70°C zugetropft. Die Mischung wurde anschließend für 8 h auf 90°C erwärmt, wobei das entstehende Wasser abdestilliert wurde. Das erhaltenen Produkt wurde zu einer Mischung aus 39 g Natriumpyrosulfit, 30 g NaOH und 1430 g dest. Wasser gegeben und für 5 h auf 80°C erwärmt. Es wurden 2830 g Sulfosuccinatlösung mit einem Gehalt von 50 Gew.-% erhalten.

### Beispiel 13

606 g des Alkohols aus Beispiel 2 wurden bei 70°C mit 71 g Polyphosphorsäure versetzt und 2 h bei 70°C gerührt. Nach weiteren 3 h bei 100°C wurden bei 90°C 24 g Wasser zugegeben und nochmals 2 h gerührt. Es wurden 560 g Produkt erhalten, das eine Mischung aus 80 Gew.-% Phosphorsäuremonoester und 7 Gew.-% Phosphorsäurediester war, Rest Wasser. Das Produkt enthielt keinen Phosphorsäuretriester.

### Beispiel 14

1260 g des Alkohols aus Beispiel 1 wurden bei 70°C mit 113 g Polyphosphorsäure versetzt und 2 h bei 70°C gerührt. Nach weiteren 2 h bei 100°C wurden bei 90°C 30 g Wasser zugegeben und nochmals 2 h gerührt. Es wurden 1400 g Produkt erhalten, das eine Mischung aus 82 Gew.-% Phosphorsäuremonoester und 8 Gew.-% Phosphorsäurediester war, Rest Wasser. Das Produkt enthielt keinen Phosphorsäuretriester.

### Beispiele für die Herstellung von Sulfonsäuren

### Beispiel 15

850 g von Alkohol aus Beispiel 4 wurden unter Stickstoff bei 50°C mit 81 g 3-Hydroxypropansulfonsäure-Natriumsalz und 20 g NaOH-Prills versetzt und 3 h gerührt. Anschließend wurde das Gemisch noch 2 h bei 70°C gerührt. Die Unterphase wurde verworfen und die Oberphase mit 5 g Essigsäure neutralisiert. Man erhielt 855 g (96 %) des gewünschten Sulfonsäureethers.

### Beispiel 16

728 g von Alkohol aus Beispiel 2 wurden unter Stickstoff bei 50°C mit 174 g 4-Hydroxybenzolsulfonsäure-Natriumsalz Dihydrat und 30 g NaOH-Prills versetzt und 1 h gerührt. Anschließend wurde das Gemisch noch 2 h bei 70°C gerührt. Die Unterphase wurde verworfen und die Oberphase mit 7 g Essigsäure neutralisiert. Man erhielt 810 g (94 %) des gewünschten Sulfonsäureethers.

### Beispiel 17

650 g des Alkohols aus Beispiel 5 wurden mit 11 g Natriumhydroxidprills versetzt und für 2 Stunden bei 100°C im Vakuum getrocknet. Anschließend wurde unter Stickstoff bei 90°C 0,25 mol (34 g) Butansulton zugetropft und für 6 Stunden gerührt. Das α-Vinyloxy-Ω-sulfonat-Ethylenoxyd-Propylenoxid-phenylgylcidylblockcopolymer konnte gemäß NMR Analyse mit 70 % Ausbeute erhalten werden. Das NMR Spektrum entsprach folgenden Strukturen:

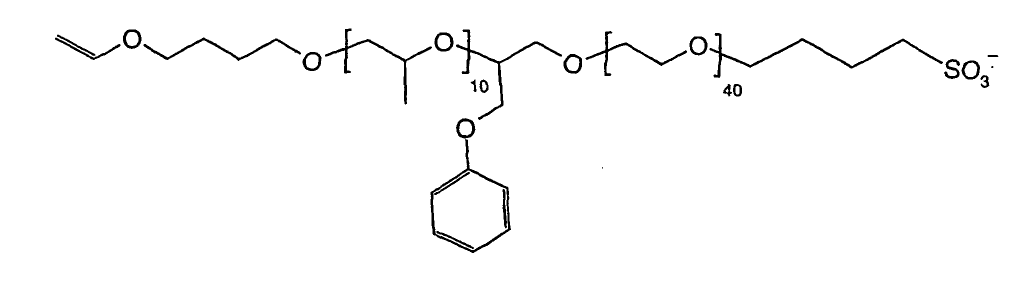

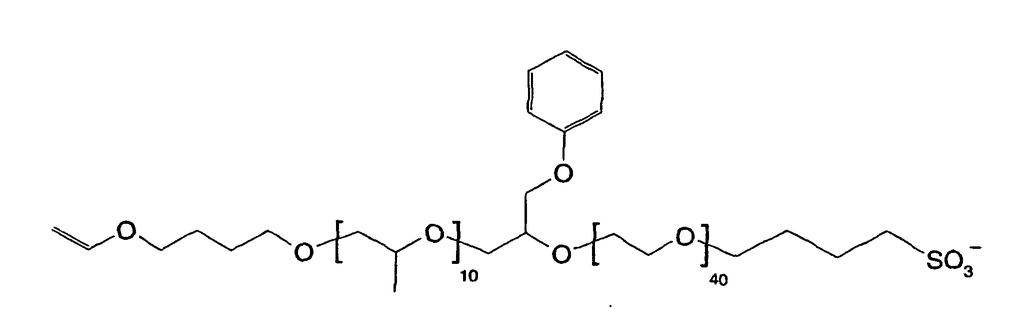

### Beispiele für die Herstellung von Carbonsäuren

### Beispiel 18

630 g des Alkohols aus Beispiel 1 wurden unter Stickstoff bei 50°C mit 59 g Chloressigsäure-Natriumsalz und 20 g NaOH-Prills versetzt und 3 h gerührt. Anschließend wurde das Gemisch noch 4 h bei 70°C gerührt. Die Unterphase wurde verworfen und die Oberphase mit 6 g Essigsäure neutralisiert. Man erhielt 650 g (97 %) des gewünschten Carbonsäureethers.

### Beispiel 19

1275 g von Alkohol aus Beispiel 4 wurden unter Stickstoff bei 50°C mit 120 g 4-Hydroxybenzoesäure-Natriumsalz und 30 g NaOH-Prills versetzt und 1 h gerührt. Anschließend wurde das Gemisch noch 2 h bei 80°C gerührt. Die Unterphase wurde verworfen und die Oberphase mit 10 g Essigsäure neutralisiert. Man erhielt 1320 g (96 %) des gewünschten Carbonsäureethers.

### Herstellung von Polymerdispersionen

### Beispiel 20

### Styrol/Acrylat-Dispersion

Es wurden 1020 g einer Monomeremulsion bestehend aus 331,8 g vollentsalztem Wasser, 4,8 g ®Emulsogen EPA 073 (Natriumalkylpolyethylenglykolethersulfat, Clariant GmbH), 13,2 g des erfindungsgemäßen Schwefelsäuremonoester aus Beispiel 10, 3,6 g Natriumhydrogencarbonat, 216 g Styrol, 300 g n-Butylacrylat, 144 g Methylacrylat und 6,6 g Methacrylsäure sowie eine Initiatorlösung bestehend aus 3,33 g Ammoniumperoxodisulfat und 85,5 ml vollentsalztem Wasser hergestellt.

In einem 2 Liter Reaktionsgefäß wurden 204,54 g vollentsalztes Wasser vorgelegt und 6,6 g des erfindungsgemäßen Schwefelsäuremonoester aus Beispiel 10 zugegeben. Unter Stickstoffatmosphäre und Rühren mit einem Ankerrührer wurde die Emulgatorlösung im Reaktionsgefäß auf 80°C erwärmt. Anschließend wurden 22,2 ml Initiatorlösung und 25,5 ml der Monomeremulsion zugegeben. Die radikalische Polyadditionsreaktion beginnt. Über das Wasserbad wurde das Reaktionsgemisch gekühlt und konstant bei 79 - 81°C gehalten. Die restlichen 994,5 g der Monomeremulsion und 66,6 g der Initiatorlösung wurden über einen Zeitraum von 3 Stunden zugegeben. Anschließend wurde über das Wasserbad das Reaktionsgemisch eine weiter Stunde bei 80°C gehalten und dann auf Raumtemperatur abgekühlt. Der pH-Wert der hergestellten Polymerdispersion wurde mit 12,5 %iger Ammoniak-Lösung auf pH 7 - 8 eingestellt.

Die resultierende Polymerdispersion hat einen Feststoffgehalt von 52 % und ein Koagulat von < 0,006 % über einem 100 µm-Sieb und von < 0,006 % über einem 40 µm-Sieb, bezogen auf die Dispersion. Die mittlere Teilchengröße (Z_{AVE}), gemessen mittels dynamischer Lichtstreuung, beträgt 144 nm mit einer Polydispersität von 0,035.

### Beispiel 21

### Styrol/Acrylat-Dispersion

Es wurden 1020 g einer Monomeremu!sion bestehend aus 336,6 g vollentsalztem Wasser, 13,2 g des erfindungsgemäßen Schwefelsäuremonoester gemäß Beispiel 10, 3,6 g Natriumhydrogencarbonat, 216 g Styrol, 300 g n-Butylacrylat, 144 g Methylacrylat und 6,6 g Methacrylsäure sowie eine Initiatorlösung bestehend aus 3,33 g Ammoniumperoxodisulfat und 85,5 ml vollentsalztem Wasser hergestellt.

In einem 2 Liter Reaktionsgefäß wurden 204,54 g vollentsalztes Wasser vorgelegt und 6,6 g des erfindungsgemäßen Schwefelsäuremonoester aus Beispiel 10 zugegeben. Unter Stickstoffatmosphäre und Rühren mit einem Ankerrührer wurde die Emulgatorlösung im Reaktionsgefäß auf 80°C erwärmt. Anschließend wurden 22,2 ml Initiatorlösung und 25,5 ml der Monomeremulsion zugegeben. Die radikalische Polyadditionsreaktion beginnt. Über das Wasserbad wurde das Reaktionsgemisch gekühlt und konstant bei 79 - 81 °C gehalten. Die restlichen 994,5 g der Monomeremulsion und 66,6 g der Initiatorlösung wurden über einen Zeitraum von 3 Stunden zugegeben. Anschließend wurde über das Wasserbad das Reaktionsgemisch eine weiter Stunde bei 80°C gehalten und dann auf Raumtemperatur abgekühlt. Der pH-Wert der hergestellten Polymerdispersion wurde mit 12,5 %iger Ammoniak-Lösung auf pH 7 - 8 eingestellt.

Die resultierende Polymerdispersion hatte einen Feststoffgehalt von 52 % und ein Koagulat von < 0,008 % über einem 100 µm-Sieb und von < 0,008 % über einem 40 µm-Sieb, bezogen auf die Dispersion. Die mittlere Teilchengröße (Z_{AVE}), gemessen mittels dynamischer Lichtstreuung, beträgt 132 nm mit einer Polydispersität von 0,028.

### Beispiel 22

### Reinacrylat-Dispersion

Es wurden 1800 g einer Monomeremulsion bestehend aus 397,2 g vollentsalztem Wasser, 9,6 g Emulsogen EPA 073 (Natriumalkylpolyethylenglykolethersulfat), 27,0 g des erfindungsgemäßen Schwefelsäuremonoester gemäß Beispiel 10, 2,2 g Dodecylmercaptan, 150 g Methylmethacrylat, 350 g 2-Ethylhexylacrylat, 850 g n-Butylacrylat und 14 g Methacrylsäure sowie 57 g einer Initiatorlösung bestehend aus 7,1 g Ammoniumperoxodisulfat und 49,9 g vollentsalztem Wasser hergestellt.

In einem 3 Liter Reaktionsgefäß wurden 263 g vollentsalztes Wasser vorgelegt und unter Stickstoffatmosphäre über ein Wasserbad auf 80°C erwärmt. Anschließend wurden 17 g der Initiatorlösung zugegeben und sofort mit der kontinuierlichen Zugabe der 1800 g Monomeremulsion und der restlichen 40 g Initiatorlösung begonnen. Die Dosierung beider Komponenten erfolgte unter ständigem Rühren mit einem Ankerrührer und unter Stickstoffatmosphäre innerhalb eines Zeitraumes von 3 Stunden. Danach wurde das Reaktionsgemisch für eine weitere Stunde bei 80°C temperiert und anschließend auf Raumtemperatur abgekühlt. Der pH-Wert der hergestellten Polymerdispersion wurde mit 12,5 %iger Ammoniak-Lösung auf pH 7 - 8 eingestellt.

Die resultierende Polymerdispersion hatte einen Feststoffgehalt von 65 % und ein Koagulat von < 0,1 % über einem 100 µm-Sieb und von < 0,2 % über einem 40 µm-Sieb, bezogen auf die Dispersion.

### Beispiel 23

### Styrol/Acrylat-Dispersion

Es wurden 1020 g einer Monomeremulsion bestehend aus 331,8 g vollentsalztem Wasser, 6,6 g des erfindungsgemäßen Alkohols aus Beispiel 1, 6,6 g ®Emulsogen EPA 073 (Natriumalkylpolyethylenglykolethersulfat, Clariant GmbH), 3,6 g Natriumhydrogencarbonat, 216 g Styrol, 300 g n-Butylacrylat, 144 g Methylacrylat und 6,6 g Methacrylsäure sowie eine Initiatorlösung bestehend aus 3,33 g Ammoniumperoxodisulfat und 85,5 ml vollentsalztem Wasser hergestellt.

In einem 2 Liter Reaktionsgefäß wurden 204,54 g vollentsalztes Wasser vorgelegt und 6,6 g des erfindungsgemäßen Schwefelsäuremonoester zugegeben. Unter Stickstoffatmosphäre und Rühren mit einem Ankerrührer wurde die Emulgatorlösung im Reaktionsgefäß auf 80°C erwärmt. Anschließend wurden 22,2 ml Initiatorlösung und 25,5 ml der Monomeremulsion zugegeben. Die radikalische Polyadditionsreaktion beginnt. Über das Wasserbad wurde das Reaktionsgemisch gekühlt und konstant bei 79 - 81 °C gehalten. Die restlichen 994,5 g der Monomeremulsion und 66,6 g der Initiatorlösung wurden über einen Zeitraum von 3 Stunden zugegeben. Anschließend wurde über das Wasserbad das Reaktionsgemisch eine weiter Stunde bei 80°C gehalten und dann auf Raumtemperatur abgekühlt. Der pH-Wert der hergestellten Polymerdispersion wurde mit 12,5 %iger Ammoniak-Lösung auf pH 7 - 8 eingestellt.

Die resultierende Polymerdispersion hatte einen Feststoffgehalt von 52 % und ein Koagulat von < 0,1 % über einem 100 µm-Sieb und von < 0,15 % über einem 40 µm-Sieb, bezogen auf die Dispersion.

### Beispiel 24

### Styrol/Acrylat-Dispersion

Es wurden 1020 g einer Monomeremulsion bestehend aus 331,8 g vollentsalztem Wasser, 6,6 g des erfindungsgemäßen Alkohols aus Beispiel 1, 6,6 g des erfindungsgemäßen Alkohols aus Beispiel 10, 3,6 g Natriumhydrogencarbonat, 216 g Styrol, 300 g n-Butylacrylat, 144 g Methylacrylat und 6,6 g Methacrylsäure sowie eine Initiatorlösung bestehend aus 3,33 g Ammoniumperoxodisulfat und 85,5 ml vollentsalztem Wasser hergestellt.

In einem 2 Liter Reaktionsgefäß wurden 204,54 g vollentsalztes Wasser vorgelegt und 6,6 g des erfindungsgemäßen Schwefelsäuremonoester zugegeben. Unter Stickstoffatmosphäre und Rühren mit einem Ankerrührer wurde die Emulgatorlösung im Reaktionsgefäß auf 80°C erwärmt. Anschließend wurden 22,2 ml Initiatorlösung und 25,5 ml der Monomeremulsion zugegeben. Die radikalische Polyadditionsreaktion beginnt. Über das Wasserbad wurde das Reaktionsgemisch gekühlt und konstant bei 79 - 81 °C gehalten. Die restlichen 994,5 g der Monomeremulsion und 66,6 g der Initiatorlösung wurden über einen Zeitraum von 3 Stunden zugegeben. Anschließend wurde über das Wasserbad das Reaktionsgemisch eine weiter Stunde bei 80°C gehalten und dann auf Raumtemperatur abgekühlt. Der pH-Wert der hergestellten Polymerdispersion wurde mit 12,5 %iger Ammoniak-Lösung auf pH 7 - 8 eingestellt.

Die resultierende Polymerdispersion hatte einen Feststoffgehalt von 52 % und ein Koagulat von < 0,01 % über einem 100 µm-Sieb und von < 0,015 % über einem 40 µm-Sieb, bezogen auf die Dispersion.

### Vinylacetat/Acrylat-Dispersion

Es wurden 960 g einer Monomeremulsion bestehend aus 271,44 g vollentsalztem Wasser, 11,76 g ®Emulsogen EPA 073 (Natriumalkylpolyethylenglykolethersulfat, Clariant GmbH), 6,6 g des erfindungsgemäßen Schwefelsäuremonoester aus Beispiel 10, 3,6 g Natriumhydrogencarbonat, 528 g Vinylacetat, 128 g n-Butylacrylat und 6,6 g Methacrylsäure sowie eine Initiatorlösung bestehend aus 2,33 g Ammoniumperoxodisulfat und 59,87 ml vollentsalztem Wasser hergestellt.

In einem 2 Liter Reaktionsgefäß wurden 293,09 g vollentsalztes Wasser vorgelegt und 4,69 g ®Emulsogen EPA 073 (Natriumalkylpolyethylenglykolethersulfat, Clariant GmbH) und 0,12g Natriumdisulfit zugegeben. Unter Stickstoffatmosphäre und Rühren mit einem Ankerrührer wurde die Emulgatorlösung im Reaktionsgefäß auf 80°C erwärmt. Anschließend wurden 18,66 ml Initiatorlösung und 24 ml der Monomeremulsion zugegeben. Die radikalische Polyadditionsreaktion beginnt. Über das Wasserbad wurde das Reaktionsgemisch gekühlt und konstant bei 79 - 81 °C gehalten. Die restlichen 936 g der Monomeremulsion und 43,54 g der Initiatorlösung wurden über einen Zeitraum von 3,5 Stunden zugegeben. Anschließend wurde über das Wasserbad das Reaktionsgemisch eine weiter Stunde bei 80°C gehalten und dann auf Raumtemperatur abgekühlt.

Die resultierende Polymerdispersion hat einen Feststoffgehalt von 51 % und ein Koagulat von < 0,007 % über einem 100 µm-Sieb und von < 0,013 % über einem 40 µm-Sieb, bezogen auf die Dispersion. Die mittlere Teilchengröße (Z_{AVE}), gemessen mittels dynamischer Lichtstreuung, beträgt 149 nm mit einer Polydispersität von 0,026.

### Vinylacetat/Acrylat-Dispersion

Es wurden 960 g einer Monomeremulsion bestehend aus 279,9 g vollentsalztem Wasser, 13,2 g des erfindungsgemäßen Schwefelsäuremonoester aus Beispiel 10, 3,6 g Natriumhydrogencarbonat, 528 g Vinylacetat, 128 g n-Butylacrylat und 6,6 g Methacrylsäure sowie eine Initiatorlösung bestehend aus 2,33 g Ammoniumperoxodisulfat und 59,87 ml vollentsalztem Wasser hergestellt.

In einem 2 Liter Reaktionsgefäß wurden 296,46 g vollentsalztes Wasser vorgelegt und 1,32 g des erfindungsgemäßen Schwefelsäuremonoester aus Beispiel 10 und 0,12g Natriumdisulfit zugegeben. Unter Stickstoffatmosphäre und Rühren mit einem Ankerrührer wurde die Emulgatorlösung im Reaktionsgefäß auf 80°C erwärmt. Anschließend wurden 18,66 ml Initiatorlösung und 24 ml der Monomeremulsion zugegeben. Die radikalische Polyadditionsreaktion beginnt. Über das Wasserbad wurde das Reaktionsgemisch gekühlt und konstant bei 79 - 81 °C gehalten. Die restlichen 936 g der Monomeremulsion und 43,54 g der Initiatorlösung wurden über einen Zeitraum von 3,5 Stunden zugegeben. Anschließend wurde über das Wasserbad das Reaktionsgemisch eine weiter Stunde bei 80°C gehalten und dann auf Raumtemperatur abgekühlt.

Die resultierende Polymerdispersion hat einen Feststoffgehalt von 51 % und ein Koagulat von < 0,005 % über einem 100 µm-Sieb und von < 0,007 % über einem 40 µm-Sieb, bezogen auf die Dispersion. Die mittlere Teilchengröße (Z_{AVE}), gemessen mittels dynamischer Lichtstreuung, beträgt 240 nm mit einer sehr engen Polydispersität von 0,009.

## Patentansprüche

1. Copolymere aus Alkylenoxiden und Glycidylethem gemäß Formel (1) 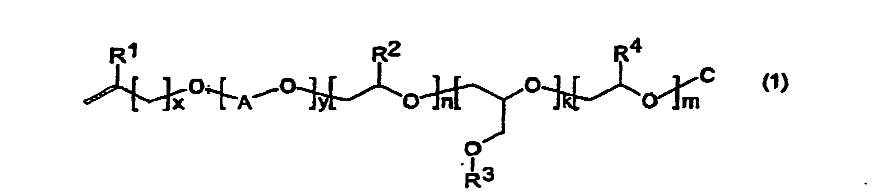 worin
R¹ Wasserstoff oder ein C₁ - C₄-Alkylrest.
R² und R⁴ Wasserstoff oder ein Alkyl- oder Arylrest mit 1 bis 30 Kohlenstoffatomen,
R³ ein Alkyl- oder Arylrest mit 1 bis 50 Kohlenstoffatomen, der auch Heteroatome enthalten kann.
A eine Alkylen-Einheit mit 2 bis 6 Kohlenstoffatomen,
x 0 oder 1,
y eine Zahl von 0 bis 10,
n eine Zahl von 0 bis 100,
k eine Zahl von 1 bis 100,
C eine Säuregruppe oder Wasserstoff, und
m eine Zahl von 1 bis 500 bedeuten,
mit der Maßgabe, dass (y+n) mindestens gleich 1 sein muss.

2. Copolymere gemäß Anspruch 1, bei denen C für den Rest einer zwei- oder dreiwertigen Säure steht.

3. Verwendung von Copolymeren gemäß Anspruch 1 und/oder 2 als polymerisierbare Emulgatoren in der Emulsionspolymerisation.

## Claims

1. A copolymer made of alkylene oxides and glycidyl ethers according to formula (I) 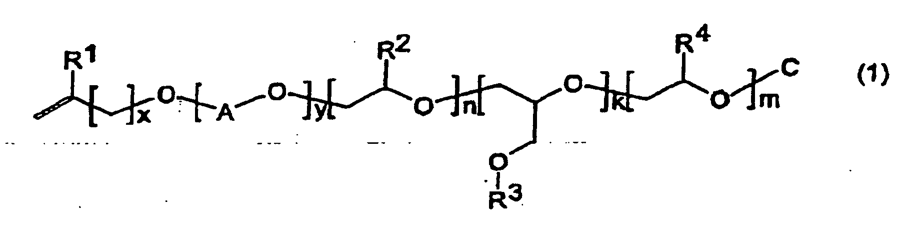 in which
R¹ is hydrogen or a C₁-C₄-alkyl radical,
R² and R⁴ are hydrogen or an alkyl or aryl radical having 1 to 30 carbon atoms,
R³ is an alkyl or aryl radical having 1 to 50 carbon atoms which may also contain heteroatoms,
A is an alkylene unit having 2 to 6 carbon atoms,
x is 0 or 1,
y is a number from 0 to 10,
n is a number from 0 to 100,
k is a number from 1 to 100,
C is an acid group or hydrogen, and
m is a number from 1 to 500,
with the proviso that (y+n) must be at least 1.

2. A copolymer as claimed in claim 1, in which C is the radical of a dibasic or tribasic acid.

3. The use of copolymers as claimed in claim 1 and/or 2 as polymerizable emulsifiers in emulsion polymerization.

## Revendications

1. Copolymères d'oxydes d'alkylène et d'éthers glycidyliques selon la formule (1) 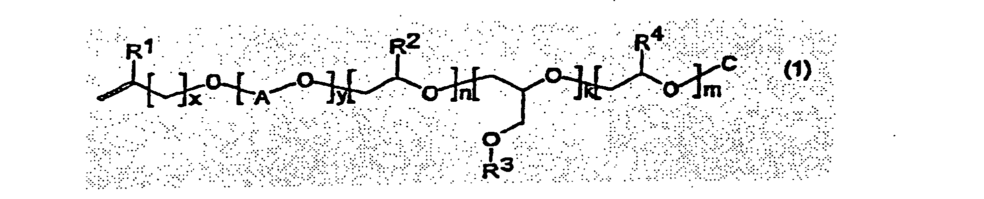 dans laquelle
R¹ représente un atome d'hydrogène ou un groupe alkyle en C₁ à C₄,
R² et R⁴ représentent un atome d'hydrogène ou un groupe alkyle ou aryle contenant 1 à 30 atomes de carbone,
R³ représente un groupe alkyle ou aryle contenant 1 à 50 atomes de carbone, qui peut également contenir des hétéroatomes,
A représente un motif alkylène contenant 2 à 6 atomes de carbone,
x vaut 0 ou 1,
y est un nombre de 0 à 10,
n est un nombre de 0 à 100,
k est un nombre de 1 à 100,
C représente un groupe acide ou un atome d'hydrogène, et
m est un nombre de 1 à 500,
à condition que la somme (y + n) soit au moins égale à 1.

2. Copolymères selon la revendication 1, dans lesquels C représente le radical d'un acide di- ou trivalent.

3. Utilisation de copolymères selon la revendication 1 et/ou 2 en tant qu'émulsifiants polymérisables dans la polymérisation en émulsion.
